# EUROPÄISCHE PATENTSCHRIFT

(11) **EP 1 961 615 B1**
(45) Veröffentlichungstag und Bekanntmachung des Hinweises auf die Patenterteilung: **15.02.2012**
(21) Anmeldenummer: 08003126.3
(22) Anmeldetag: 20.02.2008
(51) Int. Cl.: B60R 9/02, B60P 1/00

(54) **Aufnahmevorrichtung für Paletten und Nutzfahrzeug mit einer derartigen Vorrichtung**
Storage device for pallets and commercial vehicle with such a device
Dispositif de stockage pour palettes et véhicule utilitaire doté d'un tel dispositif

(30) Priorität: 23.02.2007 DE 102007008916
(43) Veröffentlichungstag der Anmeldung: 27.08.2008
(73) Patentinhaber: Kögel Trailer GmbH & Co. KG, 89349 Burtenbach (DE)
(72) Erfinder: Lima, Joachim, 89601 Schelklingen (DE)
(74) Vertreter: Meissner, Bolte & Partner

(56) Entgegenhaltungen:
- DE-U1- 9 316 936
- US-A- 1 946 368
- US-A- 4 564 134
- US-A- 4 890 970
- US-A- 5 911 467

## Beschreibung

Die Erfindung bezieht sich auf eine Aufnahmevorrichtung für Paletten zur Anbringung an einem Nutzfahrzeug gemäß dem Oberbegriff des Anspruchs 1. Eine derartige Aufnahmevorrichtung ist beispielsweise aus der DE 103 58 243 A1 oder DE 93 16 936 U bekannt.

Palettenstaukästen sind üblicherweise starre Kästen mit einem Boden, einem Dach und Seitenwänden, wobei die Kästen von zwei Seiten zum Be- und Entladen zugänglich sind. Die entsprechenden Zugangsöffnungen sind üblicherweise mit Klappen verschließbar. Bei den Kästen kommt es auf ein geringes Eigengewicht sowie eine niedrige und robuste Bauweise bei gleichzeitig möglichst großem Stauraum an. Bei dem eingangs genannten Staukasten wird dazu eine Rippenkonstruktion verwendet, die den Boden verstärkt, wobei die Höhe der einzelnen Rippen zur Ladekante hin zunimmt. Diese Konstruktion ist vergleichsweise aufwändig und trägt nicht dazu bei, das Eigengewicht des Palettenstaukastens signifikant zu senken.

Der Erfindung liegt die Aufgabe zugrunde, den eingangs genannten Palettenstaukasten im Hinblick auf ein geringes Eigengewicht zu verbessern, wobei der Palettenstaukasten sicher verschließbar sein soll.

Erfindungsgemäß wird diese Aufgabe durch eine Aufnahmevorrichtung mit den Merkmalen des Anspruchs 1 gelöst.

Der Erfindung liegt ferner die Aufgabe zugrunde, ein Nutzfahrzeug mit einer derartigen Aufnahmevorrichtung anzugeben. Diese Aufgabe wird durch den Gegenstand des Anspruchs 17 gelöst.

Die Erfindung beruht auf dem Gedanken, eine Aufnahmevorrichtung für Paletten zur Anbringung an einem Nutzfahrzeug mit einem Stauraum anzugeben, der Seiten-, Dach- und Bodenbegrenzungen aufweist. Die Seitenbegrenzungen umfassen wenigstens eine Zugangsöffnung für den Stauraum. Erfindungsgemäß ist ein flexibles Abdeckelement zum Öffnen und Schließen der Zugangsöffnung und eine Spanneinrichtung zum zentralen Spannen des Abdeckelementes in der Schließstellung vorgesehen.

Das flexible Abdeckelement ersetzt die im Stand der Technik bekannten Klappen zum Verschließen bzw. Öffnen der Zugangsöffnung. Dadurch entfällt die Mechanik zum Verschwenken der Klappe, wodurch die Konstruktion der Aufnahmevorrichtung vereinfacht und das Gewicht der Vorrichtung verringert wird. Die Spanneinrichtung zum zentralen Spannen des Abdeckelementes in der Schließstellung ermöglicht eine einfache und gleichzeitig sichere Handhabung der Vorrichtung. Die Aufnahmevorrichtung lässt sich aufgrund der zentralen Spannfunktion mit wenigen Handgriffen verschließen bzw. öffnen. Das Abdeckelement bildet im geschlossenen und gespannten Zustand eine glatte Fläche und verbessert die Tragfähigkeit der Vorrichtung.

Bei einer bevorzugten Ausführungsform weist die Spanneinrichtung Mittel zum Aufwickeln/Abwickeln des Abdeckelementes oder eines flexiblen Spannelementes auf, das mit dem Abdeckelement verbunden ist. Durch das Mittel zum Aufwickeln des Abdeckelementes bzw. des flexiblen Spannelementes wird auf einfache Weise die zentrale Spannfunktion der Spanneinrichtung verwirklicht.

Dabei kann die Spanneinrichtung eine Wickelwelle umfassen, die mit dem Abdeckelement bzw. dem Spannelement verbunden bzw. verbindbar ist. Die Bedienung der Aufnahmevorrichtung ist besonders komfortabel, wenn die Wickelwelle permanent mit dem Abdeckelement verbunden ist. Es kann aber auch vorteilhaft sein, die Wickelwelle und das Abdeckelement bzw. das Spannelement verbindbar zu gestalten, so dass die Wickelwelle und das Abdeckelement bzw. das Spannelement zum Öffnen der Vorrichtung getrennt werden.

Die Verbindung zwischen der Wickelwelle und dem Abdeckelement kann beispielsweise dadurch realisiert werden, dass eine freie Kante des Abdeckelementes einen Keder aufweist, der mit einer Kedernut der Wickelwelle im Eingriff ist. Diese Verbindung lässt sich einfach und kostengünstig durchführen und bietet gleichzeitig eine gute Sicherheit beim Verschließen der Aufnahmevorrichtung.

Die Wickelwelle kann horizontal oder vertikal angeordnet sein. Die horizontale Anordnung ist besonders für die direkte Verbindung der Wickelwelle mit dem Abdeckelement geeignet. Die vertikale Anordnung ist für die Verbindung der Wickelwelle mit dem flexiblen Spannelement vorgesehen.

Vorteilhafterweise ist die Wickelwelle mit einem Drehantrieb verbindbar. Zum Öffnen der Vorrichtung kann daher die Wickelwelle vom Drehantrieb gelöst werden, so dass die Wickelwelle zusammen mit dem Abdeckelement auf einfache Weise die Zugangsöffnung freigibt. Alternativ kann die Wickelwelle fest mit dem Drehantrieb verbunden sein.

Der Drehantrieb kann ortsfest angeordnet sein. Dies hat den Vorteil, dass die zum Verschließen der Vorrichtung mit dem Drehantrieb verbundene Wickelwelle zumindest auf einer Seite durch den Drehantrieb gelagert ist. Ferner kann ein vom Drehantrieb beabstandet angeordneter axialer Anschlag zur axialen Fixierung der Wickelwelle vorgesehen sein. Der axiale Anschlag wirkt mit dem Drehantrieb zusammen und ermöglicht eine sichere axiale Lagerung der Wickelwelle. Neben der einfachen Bauweise dieser Ausführungsform wird ein einfaches und schnelles Lösen der Wickelwelle zum Öffnen der Vorrichtung ermöglicht, da die Wickelwelle lediglich von dem Drehantrieb abgekoppelt wird.

Gemäß einer weiteren bevorzugten Ausführungsform ist ein radialer Anschlag vorgesehen, gegen den die Wickelwelle in der Schließstellung spannbar ist. Neben der einfachen Bauweise ermöglicht auch diese Ausführungsform eine sehr einfache und gleichzeitig sichere Lagerung der Wickelwelle. Dabei wirkt der radiale Anschlag im Wesentlichen senkrecht zur Längserstreckung der Wickelwelle und bildet somit ein Gegenlager für die von der Wickelwelle bzw. dem Drehantrieb aufgebrachte Spannkraft.

Dabei kann der radiale Anschlag ein Profilelement mit einem im Gebrauch nach unten gerichteten Schenkel aufweisen. Der Schenkel dient dazu, die Wickelwelle während des Spannvorganges und im gespannten Zustand, d.h. in der Schließstellung zurückzuhalten.

Bei einer weiteren bevorzugten Ausführungsform ist eine dachseitige Außenkante der Zugangsöffnung höher als eine dachseitige Außenkante der in Fahrtrichtung vorderen und/oder hinteren Seitenbegrenzung angeordnet. Diese Ausführungsform hat den Vorteil, dass damit die Voraussetzung für eine Vergrößerung des Stauraumes gegeben ist. Durch die höher angeordnete Außenkante der Zugangsöffnung kann auch die zugehörige Innenkante der Zugangsöffnung entsprechend höher angeordnet werden. Das bedeutet, dass die Innenkante der Zugangsöffnung mindestens auf gleicher Höhe oder noch höher als die dachseitige Außenkante der vorderen bzw. hinteren Seitenbegrenzung angeordnet sein kann. Dadurch ergibt sich eine Bauweise, bei der die Dachbegrenzung mit der Innenkante der Zugangsöffnung fluchtet oder zumindest nicht über die Dachbegrenzung nach innen vorsteht. Dadurch wird ein Zugewinn an Stauraum erreicht.

Die in Fahrtrichtung vordere und hintere Seitenbegrenzung kann Platten aufweisen. Das bedeutet, dass die Seitenbegrenzung senkrecht zur Fahrtrichtung, d.h. seitlich am Fahrzeug hauptsächlich durch die flexible Abdeckung gebildet wird, die in der Schließstellung die Zugangsöffnung abdeckt, wohingegen die vordere und hintere Seitenbegrenzung starr ausgebildet ist.

Alternativ kann die in Fahrtrichtung vordere und hintere Seitenbegrenzung durch das flexible Abdeckelement gebildet sein. Das bedeutet, dass die komplette Seitenbegrenzung, zumindest in der Schließstellung, durch das flexible Abdeckelement gebildet ist, das die Vorrichtung vollständig umgibt. Damit wird eine weitere Verringerung des Gewichtes der Vorrichtung erreicht.

Eine weitere Vereinfachung der Bauweise der Vorrichtung sowie eine weitere Gewichtsverringerung wird dadurch erreicht, dass die Abdeckung die Dachbegrenzung bildet. Das bedeutet, dass die Seitenbegrenzung und die Dachbegrenzung durch das flexible Abdeckelement gebildet sind. Damit ergibt sich die Möglichkeit, dass die gesamte Begrenzung der Vorrichtung, bis auf den Boden, durch das flexible Abdeckelement gebildet ist, wodurch eine optimale Gewichtseinsparnis erreicht wird. Alternativ ist es auch möglich, nur die Dachbegrenzung und die Seitenbegrenzung mit den Zugangsöffnungen (seitliche Seitenbegrenzungen) durch das flexible Abdeckelement zu bilden. Die in Fahrtrichtung vordere und hintere Seitenbegrenzung weist jeweils Platten auf. Da die Dachbegrenzung und die seitliche Seitenbegrenzung durchgehend senkrecht zur Fahrtrichtung angeordnet sind, kann eine streifenartige Abdeckung bzw. bandartige Abdeckung verwendet werden, die den Dachbereich und den Seitenbereich abdeckt.

Vorzugsweise umfasst das Abdeckelement eine Plane. Die Form der Plane kann an die unterschiedlich hohen Außenkanten der Zugangsöffnung und der vorderen bzw. hinteren Seitenbegrenzung angepasst sein. Dadurch wird eine besonders gute Dichtigkeit der Vorrichtung erreicht.

Die Erfindung wird nachfolgend beispielhaft mit weiteren Einzelheiten unter Bezug auf die beigefügten schematischen Zeichnungen erläutert. In diesen zeigen
- Fig. 1: eine perspektivische Darstellung einer Aufnahmevorrichtung nach einem erfindungsgemäßen Ausführungsbeispiel, wobei aus Gründen der Übersichtlichkeit die Plane weggelassen ist;
- Fig. 2: eine Detailansicht der Aufnahmevorrichtung gemäß Fig. 1 im Bereich der Spanneinrichtung;
- Fig. 3: eine Seitenansicht der Aufnahmevorrichtung gemäß Fig. 1 im Bereich der Spanneinrichtung;
- Fig. 4: eine Seitenansicht der Aufnahmevorrichtung gemäß Fig. 1 im Bereich der axialen Anschläge, wobei die Plane dargestellt ist;
- Fig. 5: eine Detailansicht der Aufnahmevorrichtung gemäß Fig. 4 im Bereich einer Kante;
- Fig. 6: eine perspektivische Detailansicht der Aufnahmevorrichtung gemäß Fig. 1 im Bereich einer Spanneinrichtung mit Plane und Wickelwelle; und
- Fig. 7: eine Detailansicht der Aufnahmevorrichtung gemäß Fig. 1 im Bereich des axialen Anschlages mit Plane und Wickelwelle.

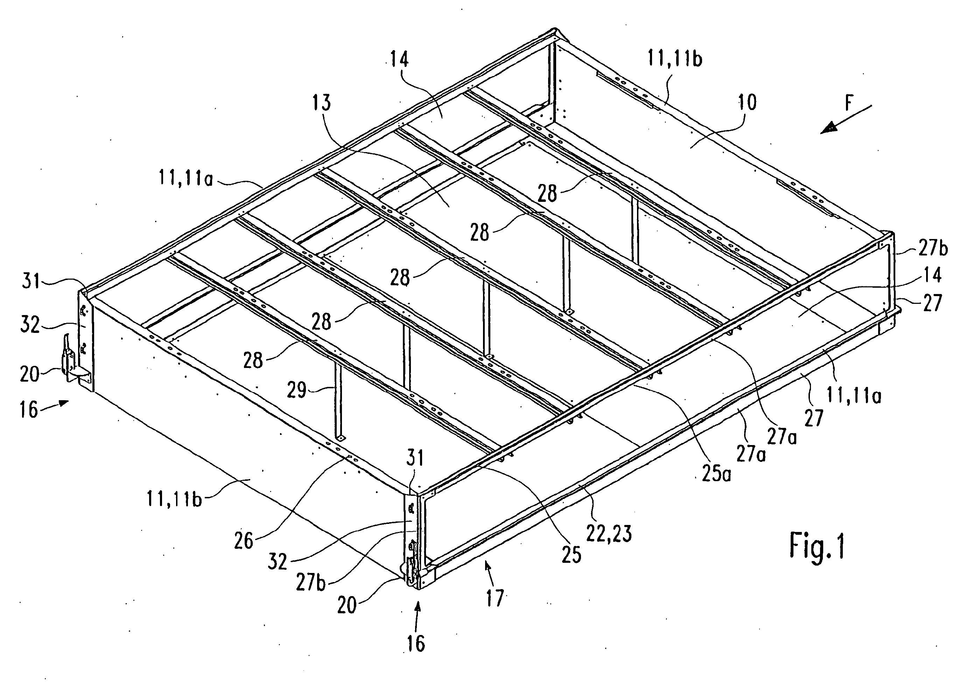

In Fig. 1 ist ein Ausführungsbeispiel einer erfindungsgemäßen Aufnahmevorrichtung für Paletten gezeigt, wie sie zur Anbringung an einem Nutzfahrzeug zum Einsatz kommt. Dabei ist aus Gründen der Übersichtlichkeit die Abdeckung 15 bzw. Plane weggelassen.

Die Aufnahmevorrichtung bzw. der Palettenstaukasten kann unter dem Fahrzeugrahmen eines Aufliegers bzw. generell eines Anhängers oder eines Motorfahrzeuges befestigt, beispielsweise angepratzt werden. Die Aufnahmevorrichtung bzw. der Staukasten weist einen Stauraum 10 auf, der mit Paletten beladen werden kann. Der Stauraum 10 umfasst Seiten, Dach- und Bodenbegrenzungen 11, 12, 13, wobei die Seitenbegrenzung 11, 11a wenigstens eine, insbesondere zwei Zugangsöffnungen 14 für den Stauraum 10 aufweist. Die Zugangsöffnungen 14 sind im Wesentlichen senkrecht zur Fahrtrichtung F angeordnet und ermöglichen ein seitliches Beladen bzw. Entladen des Stauraumes 10 mit Paletten. Die Bodenbegrenzung 13 sowie die in Fahrtrichtung vorderen und hinteren Seitenbegrenzungen 11, 11b sind durch starre Platten gebildet, die fest miteinander verbunden sind. Die zwischen den vorderen und hinteren Seitenbegrenzungen 11b angeordneten seitlichen Seitenbegrenzungen 11a weisen jeweils eine Zugangsöffnung 14 auf. Die Zugangsöffnung bzw. die Ladeöffnung 14 ist jeweils durch einen Rahmen 27 begrenzt, der zwei horizontale Längsträger 27a und zwei vertikale Querträger 27b aufweist. Die horizontalen Längsträger 27a sind dabei im Wesentlichen in Fahrtrichtung F und die vertikalen Querträger 27b im Wesentlichen senkrecht zur Fahrtrichtung F angeordnet. Die beiden vertikalen Querträger 27b sind mit der Seitenkante der jeweiligen vorderen und hinteren Seitenbegrenzung 11b und der untere Längsträger 27a mit der Bodenbegrenzung 13 verbunden. Der zwischen den beiden vertikalen Querträgern 27b angeordnete obere horizontale Längsträger 27a ist jeweils mit mehreren Dachträgern 28 verbunden. Die Dachträger 28 sind zwischen den beiden oberen Längsträgern 27a angeordnet und bilden eine Abstützung, auf der die Dachbegrenzung 12 angeordnet ist. Dabei können zwei, drei, vier oder mehr Dachträger 28 vorgesehen sein. In dem vorliegenden Ausführungsbeispiel sind fünf Dachträger 28 zwischen den beiden Längsträgern 27a angeordnet. Zur Verbesserung der Stabilität ist zwischen jedem Dachträger 28 und der Bodenbegrenzung 13 bzw. der Bodenplatte einen Zugstab 29, beispielsweise in Form eines Z-Profils, angeordnet, der zur Aufhängung der Bodenplatte dient.

Damit weist das Grundgerüst des Staukastens gemäß Fig. 1 einen im Wesentlichen offenen Dachbereich sowie (senkrecht zur Fahrtrichtung F) offene Seiten auf, die zum Schließen des Staukastens mit einer Plane, bzw. generell mit einem flexiblen Abdeckelement 15 bedeckt werden.

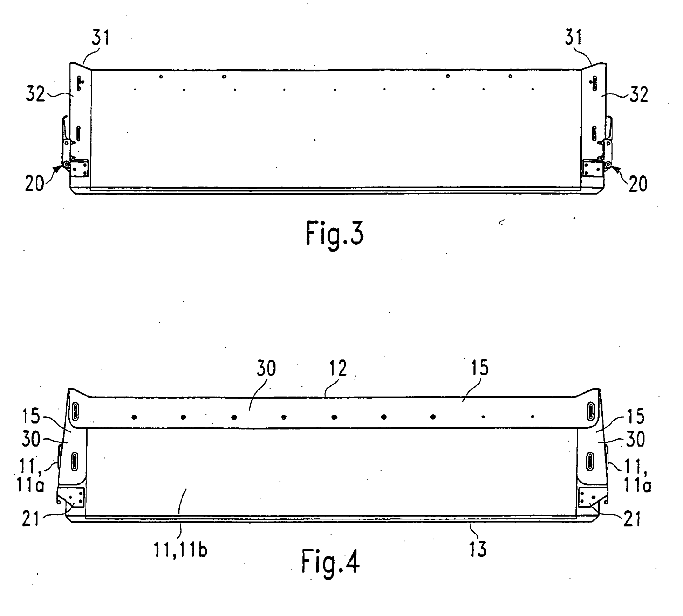

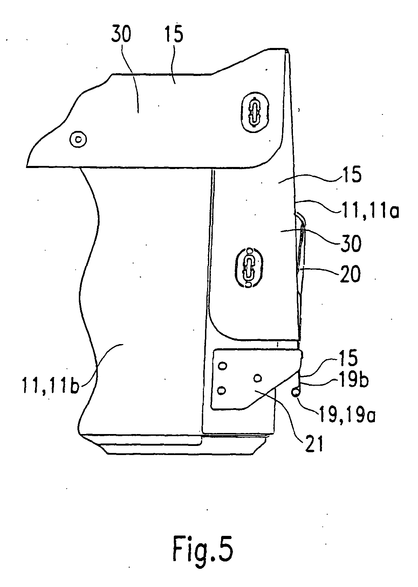

Dieser Zustand ist beispielhaft in den Figuren 4 und 5 dargestellt.

Darin ist zu erkennen, dass die Plane bzw. das Abdeckelement 15 den Staukasten im Dachbereich bedeckt und somit die Dachbegrenzung 12 bildet. Außerdem bedeckt die Plane auch den Seitenbereich des Kastens und bildet dabei die seitliche Begrenzung im Wesentlichen senkrecht zur Fahrtrichtung F. Für eine gute Abdichtung des Stauraums 10 weist die Plane jeweils Schürzen 30 auf, die die vordere bzw. hintere Seitenbegrenzung überlappen. Die Abdeckung 15 ist im Bereich der Schürzen 30 mit dem Kasten verbindbar, beispielsweise durch Ösen, Drehwirbel oder andere Befestigungsmittel. Die in den Figuren 4, 5 dargestellte Abdeckung 15 erstreckt sich über den kompletten Dachbereich sowie über den kompletten Seitenbereich, so dass eine vollständige Abdeckung des Staukastens erreicht wird. Die Schürzen 30 bzw. die Überlappung der vorderen Seitenbegrenzung 11 entsprechen dem Ausführungsbeispiel gemäß den Figuren 4, 5.

Wie besonders gut in den Figuren 3 bis 5 zu erkennen, weist die Zugangsöffnung 14 bzw. der Rahmen 27, der die Zugangsöffnung 14 begrenzt, eine dachseitige Außenkante 25 auf, die höher angeordnet ist, als eine dachseitige Außenkante 26 der in Fahrtrichtung vorderen und hinteren Seitenbegrenzung 11b. Die dachseitige Außenkante 25 der Zugangsöffnung 14 wird konkret durch den oberen Längsträger 27a gebildet, der sich horizontal zwischen den beiden Querträgern 27b erstreckt. Im Vergleich zu herkömmlichen Palettenstaukästen ist aufgrund der höheren Außenkante 25 des Längsträgers 27a auch dessen Innenkante 25a entsprechend höher angeordnet. Dabei ist die Innenkante 25a mindestens so hoch angeordnet, wie die Außenkante 26 der vorderen und hinteren Seitenbegrenzung 11b. Dadurch wird erreicht, dass keine über die maximale lichte Höhe des Stauraums hervorspringenden Kanten die effektiv nutzbare Stauraumhöhe begrenzen. Vielmehr kann der zur Verfügung stehende Stauraum voll ausgenutzt werden.

Zwischen der Außenkante 25 des oberen Längsträgers 27a und der Außenkante 26 der vorderen und hinteren Seitenbegrenzung 11 ist ein Übergangselement 31 vorgesehen, das beispielsweise in Form eines oben abgeschrägten Beschlages 32 ausgebildet sein kann, der an der vorderen bzw. hinteren Seitenbegrenzung 11b befestigt ist.

Durch das sich daraus ergebende Außenprofil wird die Dichtigkeit des Staukastens nicht beeinträchtigt, da das flexible Abdeckelement 15 bzw. die Plane der Form des Außenprofils, insbesondere des Übergangselementes 31 folgt und an der Außenkante des Staukastens eng anliegt. Die Form des Abdeckelementes 15 bzw. der Plane kann durch einen entsprechenden Zuschnitt an das Außenprofil des Staukastens angepasst werden, wie in den Figuren 4 und 5 dargestellt. Das flexible Abdeckelement 15 ist nicht auf Planen begrenzt.

Die Aufnahmevorrichtung umfasst ferner eine Spanneinrichtung 16 zum zentralen Spannen des Abdeckelementes 15 in der Schließstellung. Dabei ist jeweils eine Spanneinrichtung 16 einer Zugangsöffnung 14 zugeordnet, so dass vorliegend zwei Spanneinrichtungen 16 vorgesehen sind. Die Erfindung ist somit nicht auf eine einzige Spanneinrichtung eingeschränkt, sondern kann mehrere Spanneinrichtungen umfassen. Die Spanneinrichtung 16 ist dabei so ausgebildet, dass ein zentrales Spannen bzw. Straffen des flexiblen Abdeckelementes 15 ermöglicht wird. Darunter wird ein Spannvorgang verstanden, bei dem durch im Wesentlichen eine zentral ausgeführte Spannbewegung das Abdeckelement 15 über die gesamte oder zumindest über einen größeren Abschnitt der Länge der Zugangsöffnung 14 gespannt bzw. gestrafft wird. Die zentrale Spannfunktion kann dadurch realisiert werden, dass die Spanneinrichtung 16 generell ein Mittel 17 zum Aufwickeln des Abdeckelementes 15 aufweist. Dadurch wird direktes Spannen des Abdeckelementes 15 erreicht. Alternativ kann das Abdeckelement 15 auch durch Aufwickeln eines flexiblen Spannelementes erfolgen, das mit dem Abdeckelement 15 verbunden ist (nicht dargestellt).

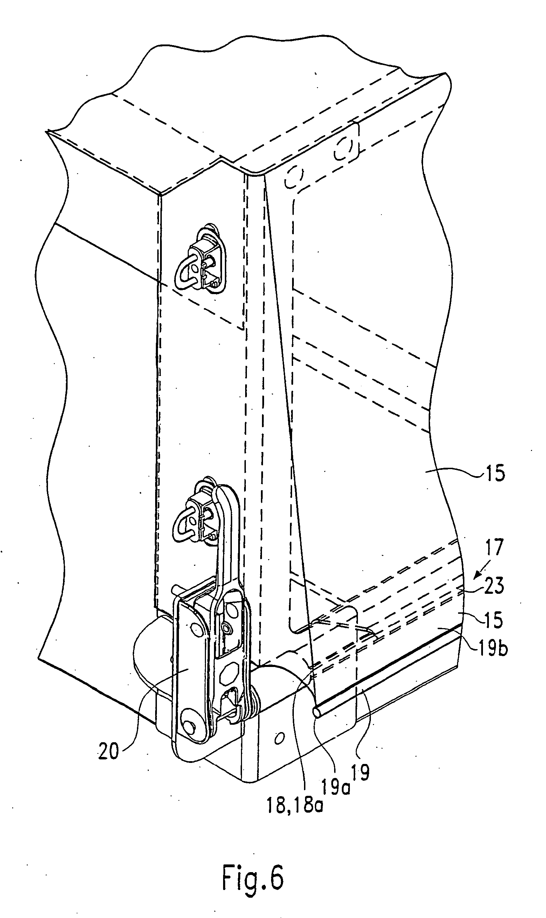

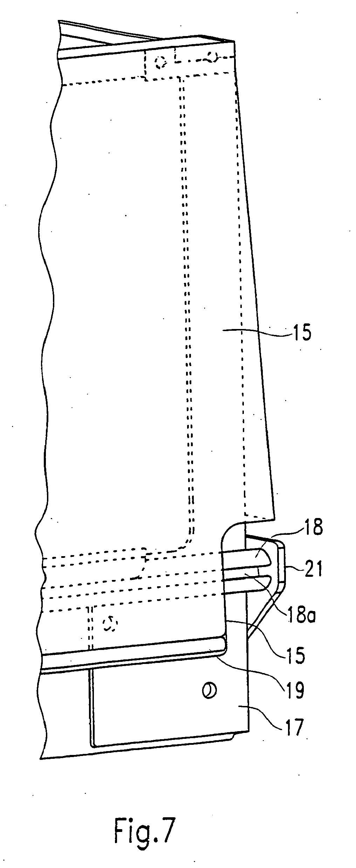

Konkret weist die Spanneinrichtung 16 eine Wickelwelle 18 auf, die mit dem Abdeckelement 15 verbunden bzw. verbindbar ist. Die Wickelwelle 18 ist horizontal angeordnet und erstreckt sich in Fahrtrichtung F. Für das Zusammenwirken der Wickelwelle 18 mit dem flexiblen Spannelement kann die Wickelwelle 18 auch vertikal angeordnet sein (nicht dargestellt). Die Wickelwelle 18 ist in den Figuren 6 und 7 zu erkennen.

Die Verbindung zwischen der Wickelwelle 18 und dem Abdeckelement 15 kann beispielsweise durch eine Kederverbindung erfolgen. Dabei weist eine freie Kante 19 des Abdeckelementes 15 einen Keder 19a auf, der mit einer Kedernut 18a der Wickelwelle 18 in Eingriff ist. In den Figuren 6 und 7 sind aus Gründen der Übersichtlichkeit die Wickelwelle 18 und der Keder 19a im getrennten Zustand dargestellt. In der Praxis ist der Keder 19a in die Kedernut 18a der Wickelwelle 18 eingeführt und permanent mit dieser verbunden. Das bedeutet, dass die Wickelwelle 18 und die Plane bzw. das flexible Abdeckelement 15 zusammen gehandhabt werden.

Wie in den Figuren 5, 6 und 7 zu erkennen, ist der Keder 19 ummantelt, wobei die Ummantelung in eine Kederfahne 19b übergeht, die wiederum mit der Plane bzw. dem Abdeckelement 15 verbunden ist. Im ausgehängten Zustand hängt die Kederfahne 19b über die Wickelwelle 18 hinaus. Dadurch wird gewährleistet, dass in eingehängtem Zustand die Kederfahne 19b ausreichend um die Wickelwelle 18 aufgewickelt werden kann, bevor die Spannwirkung eintritt.

Das erforderliche Drehmoment wird auf die Wickelwelle 18 durch einen Drehantrieb 20 aufgebracht, der mit der Wickelwelle 18 verbindbar ist. Der Drehantrieb 20 kann beispielsweise durch einen Spannratsche verwirklicht sein. Andere Antriebsmöglichkeiten sind denkbar. Zur lösbaren Verbindung der Wickelwelle 18 mit dem Drehantrieb 20 kann beispielsweise eine formschlüssige Verbindung zwischen dem antriebsseitigen Ende der Wickelwelle 18 und dem Drehantrieb 20, insbesondere einer mit dem Drehantrieb verbundenen Spannwelle 20a, bzw. Hülse, vorgesehen sein. Bei dem vorliegenden Ausführungsbeispiels kann die Wickelwelle 18 vom Drehantrieb 20 getrennt werden, ist also mit diesem lösbar verbunden. Dies hat den Vorteil, dass das Abdeckelement 15 fest mit der Wickelwelle 18 verbunden sein kann (Kederverbindung), so dass die Wickelwelle 18 und das Abdeckelement 15 zusammen handhabbar sind. Alternativ könnte die Wickelwelle 18 fest mit dem Drehantrieb 20 verbunden sein, wobei die Wickelwelle 18 und das Abdeckelement 15 lösbar verbunden sind.

Der Drehantrieb 20 ist ortsfest angeordnet. Konkret ist der Drehantrieb 20 an den Rahmen 27 angeflanscht. Dadurch wird erreicht, dass der Drehantrieb 20 als axiale und radiale Lagerung für die Wickelwelle 18 zumindest an einem Ende der Wickelwelle 18 fungiert. Für die axiale Fixierung auf der anderen Seite der Wickelwelle 18 ist ein axialer Anschlag 21 vorgesehen (Figuren 5, 7). Der axiale Anschlag 21 ist als Platte ausgebildet mit einer Nase, die über die seitliche Seitenbegrenzung 11a vorsteht. Wie besonders gut in Fig. 7 zu erkennen, stößt die Stirnseite der Wickelwelle 18 an den axialen Anschlag 21 und ist damit axial gelagert. Eine radiale Lagerung der Wickelwelle 18 am Anschlag 21 ist möglich. Bei dem Ausführungsbeispiel gemäß Fig. 7 ist keine radiale Lagerung vorgesehen, so dass ein besonders einfaches Lösen der Wickelwelle 18 zum Öffnen des Stauraumes ermöglicht wird.

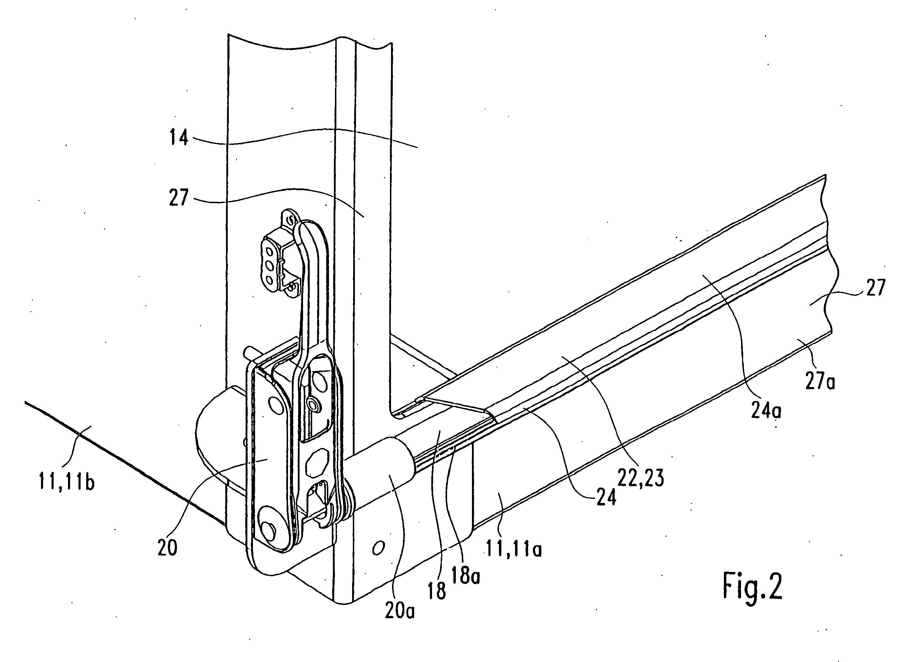

In Fig. 2 ist dargestellt, dass ein radialer Anschlag 22 vorgesehen ist, gegen den die Wickelwelle 18 in der Schließstellung spannbar ist. Der radiale Anschlag 22 ist dabei im Gebrauch oberhalb der Wickelwelle 18 angeordnet und übergreift diese wie ein Dach. Der Anschlag 22 bildet dabei zusammen mit dem unteren Längsträger 27a ein Aufnahmeteil, in das das Abdeckelement 15 beim Aufwickeln einläuft und gestrafft wird. Daraus ergibt sich für das Seitenteil eine enorme Steifigkeit, eine faltenfreie Fläche und eine leichte zentrale Verschließfähigkeit im Ratschenteil. Die Zollsicherheit ist ebenfalls gewährleistet. Konkret umfasst der radiale Anschlag 22 ein Profilelement 23 mit einem im Gebrauch nach unten gerichteten Schenkel 24. Das Profilelement 23 ist fest mit dem unteren Längsträger 27a verbunden und erstreckt sich nahezu über die gesamte Länge der Zugangsöffnung 14. Das Profilelement 23 ist dabei als Profilleiste ausgebildet, die einen weiteren Schenkel 24a aufweist, der breiter ist, als der nach unten gerichtete Schenkel 24. Der weitere Schenkel 24a und der Schenkel 24 sind im Querschnitt im Wesentlichen L-förmig ausgebildet. Der weitere Schenkel 24a ist gemäß Fig. 2 schräg nach oben abgewinkelt und mit dem Längsträger 27a verbunden. In der Praxis kann der weitere Schenkel 24a rechtwinklig oder schräg nach unten abgewinkelt am Längsträger 27a befestigt sein. Dabei ragt der nach unten gerichtete Schenkel 24 etwas in radialer Richtung über die Wickelwelle 18 hinaus. Beim Spannen wird die Wickelwelle 18 gegen den radialen Anschlag 22 gedrängt und durch diesen radial fixiert. Damit ist das flexible Abdeckelement 15 durch die Wickelwelle 18 und den radialen Anschlag 22 spannbar. Wenn die Wickelwelle 18 beidseitig radial gelagert ist, entspricht der Anschlag 21 einem Unlenkteil, das beim Spannen die Plane auf die Wickelwelle 18 umgelenkt wird. Ein Kontakt zwischen der Wickelwelle 18 und dem radialen Anschlag 22 stellt sich dann nicht zwingend ein.

Der radiale Anschlag 22 muss nicht ununterbrochen über die vollständige Länge der Zugangsöffnung 14 geführt sein. Vielmehr ist es auch möglich, mehrere radiale Anschläge 22 abschnittsweise verteilt über die Länge des Zugangsöffnung 14 anzuordnen. Auch die Form bzw. das Profil des radialen Anschlages 22 ist nicht auf die in Fig. 2 dargestellte Profilleiste beschränkt. Vielmehr sind auch andere Formen des radialen Anschlages 22 möglich, bei denen die Wickelwelle 18 beispielsweise weiter in Umfangsrichtung umgriffen wird, wodurch möglicherweise eine noch robustere Konstruktion realisiert werden kann. Ferner ist es möglich, die Spanneinrichtung 16, konkret den Drehantrieb 20 mit der Wickelwelle 18 tiefer anzuordnen, als in Fig. 2 dargestellt, so dass die Ladekante frei ist. Des weiteren ist es möglich, die Wickelwelle im Bereich des oberen Längsträgers 27a anzuordnen und eine entsprechende Umlenkeinrichtung für die Plane nach oben vorzusehen.

Eine weitere Möglichkeit besteht darin, an der Unterkante des Abdeckelementes 15 bzw. der Plane eine Hakenleiste anzubringen, die in ein komplementär ausgebildetes Aufnahmeteil am unteren Längsträger eingehakt wird. Zum Spannen ist ein Kederprofil an der Innenseite oder Außenseite des Abdeckelementes 15 oberhalb der Hakenleiste eingeschweißt, das in die auf gleicher Höhe angeordnete Wickelwelle zum Spannen eingeführt ist.

Die Plane bzw. das flexible Abdeckelement 15 bedecken somit in der Schließstellung den kompletten Dach- und seitlichen Seitenbereich und bilden somit die Dachbegrenzung 12 und die Seitenbegrenzung senkrecht zur Fahrtrichtung F, so dass die Zugangsöffnung 14 verschlossen ist. Das Abdeckelement 15 ist dabei durch die Spanneinrichtung gespannt. Im Dachbereich ist das Abdeckelement 15 fest mit den Dachträgern 28 verbunden, beispielsweise vernietet. Es ist auch möglich, die gesamte Seitenbegrenzung 11 und die Dachbegrenzung 12 durch das flexible Abdeckelement 15 bzw. die Plane auszubilden. Dazu wird anstelle der dargestellten Platten der vorderen und hinteren Seitenbegrenzung 11a eine Verstärkung der Seitenbegrenzung 11a in diesem Bereich durch Verstrebungen bzw. ein Gerippe erreicht, so dass der gesamte Aufbau der Vorrichtung bzw. des Palettenstaukastens gerüstartig gebildet ist. Der gerüstartige Aufbau wird dann komplett mit dem flexiblen Abdeckelement 15 bzw. der Plane überspannt, so dass nur der Boden bzw. die Bodenbegrenzung 13 durch eine oder mehrere Platten gebildet ist. Für die Überdeckung der vorderen und hinteren Seitenbegrenzung 11a kann die in den Figuren 4, 5 dargestellte Schürze 30, d.h. die dachseitig angeordnete horizontale Schürze 30, bis zur Unterkante der Vorrichtung verlängert und dort befestigt sein. Das flexible Abdeckelement 15 ist demnach eine einteilige Abdeckhaut, die den Palettenstaukasten, abgesehen vom Boden, vollständig umgibt. Es ist auch möglich, die Seitenbegrenzungen 11a, 11b sowie die Dachbegrenzung mit separaten Abdeckelementen abzudecken.

Zum Öffnen des Staukastens wird der Drehantrieb 20 bzw. die Spannratsche betätigt, so dass die Plane von der Wickelwelle 18 bzw. die Kederfahne 19b abgewickelt wird. Dadurch wird die Plane entspannt und die Wickelwelle 18 kann von der Spannratsche bzw. der Spannwelle 20a des Drehantriebs 20 abgenommen werden. Die entspannte Plane wird dann zusammengerollt und auf der Oberkante des Kastens im Bereich des oberen Längsträgers 27a abgelegt. Der Stauraum 10 ist somit seitlich zugänglich.

Zum Schließen wird die Wickelwelle 18 mit der Spannwelle 20 verbunden und die Spannratsche betätigt, so dass die Kederfahne 19b auf die Wickelwelle 18 aufgewickelt wird, bis die Plane gespannt ist.

### Bezugszeichenliste

- 10: Stauraum
- 11, 11a, 11b: Seitenbegrenzung
- 12: Dachbegrenzung
- 13: Bodenbegrenzung
- 14: Zugangsöffnung
- 15: Abdeckelement
- 16: Spanneinrichtung
- 17: Mittel zum Aufwickeln des Abdeckelementes
- 18: Wickelwelle
- 18a: Kedernut
- 19: Kante
- 19a: Keder
- 19b: Kederfahne
- 20: Drehantrieb
- 20a: Spannwelle
- 21: axialer Anschlag
- 22: radialer Anschlag
- 23: Profilelement
- 24, 24a: Schenkel
- 25, 26: dachseitige Außenkante
- 27: Rahmen
- 27a: Längsträger
- 27b: Querträger
- 28: Dachträger
- 29: Stütze
- 30: Schürzen
- 31: Übergangselement
- 32: Beschlag

## Patentansprüche

1. Palettenstaukasten zur Befestigung unter einem Fahrzeugrahmen eines Anhängers oder Motorfahrzeugs mit einem Stauraum (10), der Seiten-, Dach- und Bodenbegrenzungen (11, 12, 13) aufweist, wobei die Seitenbegrenzung (11, 11a) wenigstens eine Zugangsöffnung (14) für den Stauraum (10) umfasst,
**gekennzeichnet durch**
ein flexibles Abdeckelement (15) zum Öffnen und Schließen der Zugangsöffnung (14) und eine Spanneinrichtung (16) zum zentralen Spannen des Abdeckelementes (15) in der Schließstellung.

2. Palettenstaukasten nach Anspruch 1,
**dadurch gekennzeichnet, dass**
die Spanneinrichtung (16) Mittel (17) zum Aufwickeln/Abwickeln des Abdeckelementes (15) oder eines flexiblen Spannelementes aufweist, das mit dem Abdeckelement (15) verbunden ist.

3. Palettenstaukasten nach Anspruch 1 oder 2,
**dadurch gekennzeichnet, dass**
die Spanneinrichtung (16) eine Wickelwelle (18) umfasst, die mit dem Abdeckelement (15) bzw. dem Spannelement verbunden bzw. verbindbar ist.

4. Palettenstaukasten nach Anspruch 3,
**dadurch gekennzeichnet, dass**
eine freie Kante (19) des Abdeckelementes (15) einen Keder (19a) aufweist, der mit einer Kedernut (18a) der Wickelwelle (18) im Eingriff ist.

5. Palettenstaukasten nach Anspruch 3 oder 4,
**dadurch gekennzeichnet, dass**
die Wickelwelle (18) horizontal oder vertikal angeordnet ist.

6. Palettenstaukasten nach wenigstens einem der Ansprüche 3 bis 5,
**dadurch gekennzeichnet, dass**
die Wickelwelle (18) mit einem Drehantrieb (20) verbunden bzw. verbindbar ist.

7. Palettenstaukasten nach Anspruch 6,
**dadurch gekennzeichnet, dass**
der Drehantrieb (20) ortsfest angeordnet ist.

8. Palettenstaukasten nach Anspruch 6 oder 7,
**dadurch gekennzeichnet, dass**
ein vom Drehantrieb (20) beabstandet angeordneter axialer Anschlag (21) zur axialen Fixierung der Wickelwelle (18) vorgesehen ist.

9. Palettenstaukasten nach wenigstens einem der Ansprüche 3 bis 8,
**dadurch gekennzeichnet, dass**
ein radialer Anschlag (22) vorgesehen ist, gegen den die Wickelwelle (18) in der Schließstellung spannbar ist.

10. Palettenstaukasten nach Anspruch 9,
**dadurch gekennzeichnet, dass**
der radiale Anschlag (22) ein Profilelement (23) mit einem im Gebrauch nach unten gerichteten Schenkel (24) aufweist.

11. Palettenstaukasten nach wenigstens einem der Ansprüche 1 bis 10,
**dadurch gekennzeichnet, dass**
eine dachseitige Außenkante (25) der Zugangsöffnung (14) höher als eine dachseitige Außenkante (26) der in Fahrtrichtung vorderen und/oder hinteren Seitenbegrenzung (11b) angeordnet ist.

12. Palettenstaukasten nach wenigstens einem der Ansprüche 1 bis 11,
**dadurch gekennzeichnet, dass**
die in Fahrtrichtung vordere und hintere Seitenbegrenzung (11, 11b) Platten aufweist.

13. Palettenstaukasten nach wenigstens einem der Ansprüche 1 bis 11,
**dadurch gekennzeichnet, dass**
die in Fahrtrichtung vordere und hintere Seitenbegrenzung (11, 11b) durch das Abdeckelement (15) gebildet ist.

14. Palettenstaukasten nach wenigstens einem der Ansprüche 1 bis 13,
**dadurch gekennzeichnet, dass**
das Abdeckelement (15) eine Plane umfasst.

15. Palettenstaukasten nach Anspruch 14,
**dadurch gekennzeichnet, dass**
die Form der Plane an die unterschiedlich hohen Außenkanten (25, 26) der Zugangsöffnung (14) und der vorderen bzw. hinteren Seitenbegrenzung (11b) angepasst ist.

16. Palettenstaukasten nach wenigstens einem der Ansprüche 1 bis 15,
**dadurch gekennzeichnet, dass**
das Abdeckelement (15) die Dachbegrenzung (12) bildet.

17. Nutzfahrzeug mit einem Palettenstaukasten nach wenigstens einem der Ansprüche 1 bis 16.

## Claims

1. Pallet-stowage box for fixing underneath a vehicle frame of a trailer or motor vehicle, having a stowage space (10) which has a side boundary, top boundary and bottom boundary (11, 12, 13), the side boundary (11, 11a) including at least one access opening (14) to the stowage space (10),
**characterised by**
a flexible cover element (15) for opening and closing the access opening (14) and a tensioning device (16) for centrally tensioning the cover element (15) in the closed position.

2. Pallet-stowage box according to claim 1,
**characterised in that**
the tensioning device (16) has means (17) for the winding-on/winding-off of the cover element (15) or of a flexible tensioning element connected to the cover element (15).

3. Pallet-stowage box according to claim 1 or 2,
**characterised in that**
the tensioning device (16) comprises a winding shaft (18) which is connected or connectible to the cover element (15) or tensioning element.

4. Pallet-stowage box according to claim 3,
**characterised in that**
a free edge (19) of the cover element (15) has welting (19a), which is in engagement with a welting slot (18a) of the winding shaft (18).

5. Pallet-stowage box according to claim 3 or 4,
**characterised in that**
the winding shaft (18) is arranged horizontally or vertically.

6. Pallet-stowage box according to at least one of claims 3 to 5,
**characterised in that**
the winding shaft (18) is connected or connectible to a rotary drive (20).

7. Pallet-stowage box according to claim 6,
**characterised in that**
the rotary drive (20) is arranged in a stationary position.

8. Pallet-stowage box according to claim 6 or 7,
**characterised in that**
an axial stop (21) arranged spaced away from the rotary drive (20) is provided for fixing the winding shaft (18) axially.

9. Pallet-stowage box according to at least one of claims 3 to 8,
**characterised in that**
a radial stop (22) is provided against which the winding shaft (18) can be tensioned in the closed position.

10. Pallet-stowage box according to claim 9,
**characterised in that**
the radial stop (22) comprises a profiled element (23) having a limb (24) which faces downwards in use.

11. Pallet-stowage box according to at least one of claims 1 to 10,
**characterised in that**
a top outer edge (25) of the access opening (14) is arranged at a greater height than a top outer edge (26) of the front and/or rear side boundary (11 b) in the direction of travel.

12. Pallet-stowage box according to at least one of claims 1 to 11,
**characterised in that**
the front and rear side boundary (11, 11 b) in the direction of travel comprises panels.

13. Pallet-stowage box according to at least one of claims 1 to 11,
**characterised in that**
the front and rear side boundary (11, 11 b) in the direction of travel is formed by the cover element (15).

14. Pallet-stowage box according to at least one of claims 1 to 13,
**characterised in that**
the cover element (15) comprises a tarpaulin.

15. Pallet-stowage box according to claim 14,
**characterised in that**
the shape of the tarpaulin is matched to the outer edges (25, 26) of differing heights of the access opening (14) and of the front and/or rear side boundary (11 b).

16. Pallet-stowage box according to at least one of claims 1 to 15,
**characterised in that**
the cover element (15) forms the top boundary (12).

17. Utility vehicle having a pallet-stowage box according to at least one of claims 1 to 16.

## Revendications

1. Coffre à palettes à fixer sous un châssis d'une remorque ou d'un véhicule à moteur, avec un espace de rangement (10) comportant des délimitations latérales, de toit et de fond (11, 12, 13), la délimitation latérale (11, 11a) comprenant au moins une ouverture (14) d'accès à l'espace de rangement (10), **caractérisé par** un élément de recouvrement (15) souple pour ouvrir et fermer l'ouverture d'accès (14) et un dispositif tendeur (16) pour tendre de manière centralisée l'élément de recouvrement (15) dans la position fermée.

2. Coffre à palettes selon la revendication 1, **caractérisé en ce que** le dispositif tendeur (16) comporte des moyens (17) pour enrouler/dérouler l'élément de recouvrement (15) ou un élément tendeur souple relié à l'élément de recouvrement (15).

3. Coffre à palettes selon la revendication 1 ou 2, **caractérisé en ce que** le dispositif tendeur (16) comporte un arbre d'enroulement (18), qui est relié ou peut être relié à l'élément de recouvrement (15) ou à l'élément tendeur.

4. Coffre à palettes selon la revendication 3, **caractérisé en ce qu'**une arête libre (19) de l'élément de recouvrement (15) comporte un bord de renforcement (19a) qui est en prise avec une rainure de bord (18a) de l'arbre d'enroulement (18).

5. Coffre à palettes selon la revendication 3 ou 4, **caractérisé en ce que** l'arbre d'enroulement (18) est disposé horizontalement ou verticalement.

6. Coffre à palettes selon au moins l'une quelconque des revendications 3 à 5, **caractérisé en ce que** l'arbre d'enroulement (18) est relié ou peut être relié à un entraînement en rotation (20).

7. Coffre à palettes selon la revendication 6, **caractérisé en ce que** l'entraînement en rotation (20) est disposé fixé à demeure.

8. Coffre à palettes selon la revendication 6 ou 7, **caractérisé en ce qu'**une butée axiale (21) disposée à distance de l'entraînement en rotation (20) est prévue pour l'immobilisation axiale de l'arbre d'enroulement (18).

9. Coffre à palettes selon au moins l'une quelconque des revendications 3 à 8, **caractérisé en ce qu'**une butée radiale (22) est prévue, contre laquelle l'arbre d'enroulement (18) peut être serré dans la position fermée.

10. Coffre à palettes selon la revendication 9, **caractérisé en ce que** la butée radiale (22) comporte un élément profilé (23) doté d'une branche (24) dirigée vers le bas en utilisation.

11. Coffre à palettes selon au moins l'une quelconque des revendications 1 à 10, **caractérisé en ce qu'**une arête extérieure (25) coté toit de l'ouverture d'accès (14) est disposée plus haut qu'une arête extérieure (26) coté toit de la délimitation latérale (11b) avant et/ou arrière dans le sens de marche.

12. Coffre à palettes selon au moins l'une quelconque des revendications 1 à 11, **caractérisé en ce que** la délimitation latérale (11, 11 b) avant et arrière dans le sens de marche comporte des plaques.

13. Coffre à palettes selon au moins l'une quelconque des revendications 1 à 11, **caractérisé en ce que** la délimitation latérale (11, 11 b) avant et arrière dans le sens de marche est formée par l'élément de recouvrement (15).

14. Coffre à palettes selon au moins l'une quelconque des revendications 1 à 13, **caractérisé en ce que** l'élément de recouvrement (15) comprend une bâche.

15. Coffre à palettes selon la revendication 14, **caractérisé en ce que** la forme de la bâche est adaptée aux arêtes extérieures (25, 26) de différentes hauteurs de l'ouverture d'accès (14) et de la délimitation latérale (11 b) avant et/ou arrière.

16. Coffre à palettes selon au moins l'une quelconque des revendications 1 à 15, **caractérisé en ce que** l'élément de recouvrement (15) forme la délimitation de toit (12).

17. Véhicule utilitaire doté d'un coffre à palettes selon au moins l'une quelconque des revendications 1 à 16.
